# EUROPEAN PATENT SPECIFICATION

(11) **EP 3 306 207 B1**
(45) Date of publication and mention of the grant of the patent: **21.10.2020**
(21) Application number: 15894120.3
(22) Date of filing: 29.05.2015
(51) Int. Cl.: F24F 7/08, F28F 9/007, F24F 12/00, F28D 9/00, F28D 21/00, F24F 13/30

(54) **HEAT EXCHANGE-TYPE VENTILATION DEVICE**
WÄRMETAUSCHARTIGE BELÜFTUNGSVORRICHTUNG
DISPOSITIF DE VENTILATION DE TYPE À ÉCHANGE DE CHALEUR

(43) Date of publication of application: 11.04.2018
(73) Proprietor: Mitsubishi Electric Corporation, Chiyoda-ku Tokyo 100-8310 (JP)
(72) Inventor: MIYAZAKI, Yuki, Tokyo 100-8310 (JP); AOKI, Hiroki, Tokyo 100-8310 (JP); FUJII, Yoshinori, Tokyo 102-0073 (JP); SOTOKAWA, Hajime, Tokyo 100-8310 (JP); HAYASHI, Toshiaki, Tokyo 102-0073 (JP)
(74) Representative: Mewburn Ellis LLP
(86) International application number: PCT/JP2015/065677
(87) International publication number: WO 2016/194085

(56) References cited:
- JP-A- H05 223 305
- JP-A- H07 293 960
- JP-A- H09 195 397
- JP-A- H09 195 397
- JP-A- 2004 003 858
- JP-U- S55 141 782
- JP-U- S61 128 587
- JP-U- S61 128 587

## Description

### Field

The present invention relates to a heat-exchange type ventilation apparatus that provides ventilation while allowing heat exchange between a supply airflow and a discharge airflow.

### Background

It is conventional to use a heat-exchange type ventilation apparatus that includes a main body having a supply air path and a discharge air path formed therein and a heat exchanger placed inside the main body and that provides ventilation while allowing heat exchange between air passing through the supply air path and air passing through the discharge air path.

The heat exchanger used in such a heat-exchange type ventilation apparatus includes a heat exchange element that includes a plurality of heat exchange plates, which are sheet-like partition plates, stacked together with spacing therebetween. The heat exchange plates each have a rectangular shape and the heat exchange element thus has a cuboid shape. Patent Literature 1 discloses a configuration that includes frame members that cover the edges of the heat exchange element that extend in a stacking direction of the heat exchange plates.

### Citation List

### Patent Literature

Patent Literature 1: Japanese Patent No. 3305561

JPH07293960 describes a heat exchanging element that can be inserted into or removed from a casing along a longitudinal direction of a connecting member of a frame. A rail-like part for guiding insertion or removal of the element by engaging with a bead as a guide member is provided at the member. The part is engaged with the bead to guide the insertion or removal of the element into or from an element containing chamber.

### Summary

### Technical Problem

In the main body of the heat-exchange type ventilation apparatus, the frame members of the heat exchanger abut on the main body. Abutting portions of the frame members and the main body are boundary portions between the supply air path and the discharge air path in the main body. In order to prevent air passing through these paths from mixing with each other, the abutting portions of the frame members and the main body are required to have airtightness to prevent air from leaking from one of the paths to the other. In particular, a configuration that maintains airtightness even when the heat exchange element has contracted due to changes over time is required.

The present invention has been achieved in view of the above, and an object of the present invention is to provide a heat-exchange type ventilation apparatus that can improve airtightness between frame members attached to a heat exchange element and a main body.

### Solution to Problem

In order to solve the above problems and achieve the object, the present invention is a heat-exchange type ventilation apparatus according to independent claim 1. Preferred embodiments may be taken from the dependent claims.

### Advantageous Effects of Invention

A heat-exchange type ventilation apparatus according to the present invention produces an effect of enabling an improvement in airtightness between frame members attached to a heat exchange element and a main body.

### Brief Description of Drawings

FIG. 1 is an exploded perspective view of a heat-exchange type ventilation apparatus according to a first embodiment of the present invention as viewed from the top surface side.
FIG. 2 is an exploded perspective view of the heat-exchange type ventilation apparatus according to the first embodiment as viewed from the bottom surface side.
FIG. 3 is a plan view of the heat-exchange type ventilation apparatus according to the first embodiment.
FIG. 4 is a cross-sectional view of the heat-exchange type ventilation apparatus according to the first embodiment as viewed from the side thereof.
FIG. 5 is a perspective view of a heat exchanger according to the first embodiment.
FIG. 6 is an exploded perspective view of the heat exchanger according to the first embodiment.
FIG. 7 is a partially enlarged cross-sectional view of a corner portion of the heat exchanger according to the first embodiment.
FIG. 8 is a partially enlarged cross-sectional view of a corner portion of the heat exchanger accommodated in a housing in the heat-exchange type ventilation apparatus according to the first embodiment.
FIG. 9 is a partially enlarged cross-sectional view of a corner portion of the heat exchanger accommodated in the housing in the heat-exchange type ventilation apparatus according to the first embodiment.

### Description of Embodiments

A heat-exchange type ventilation apparatus according to embodiments of the present invention will now be described in detail with reference to the drawings. The present invention is not limited to the embodiments.

### First embodiment.

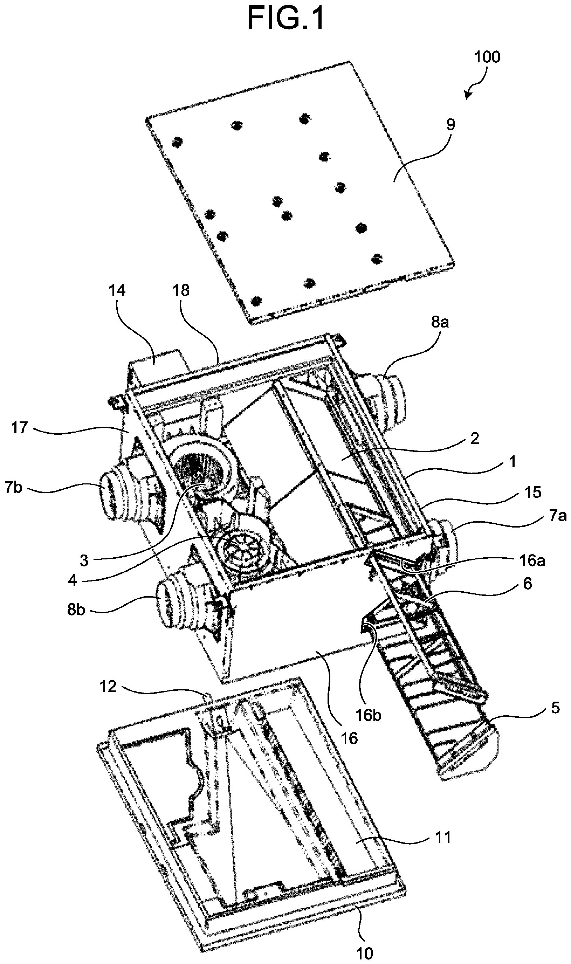

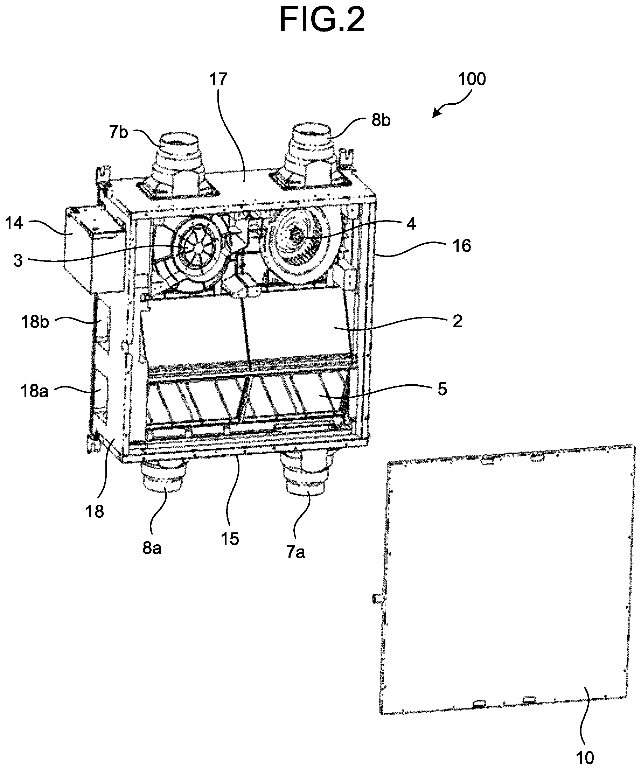

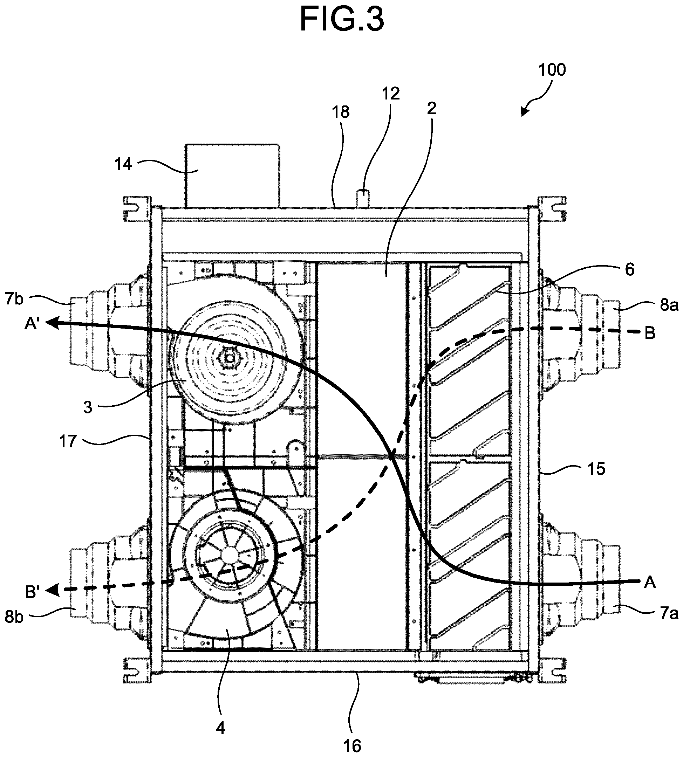

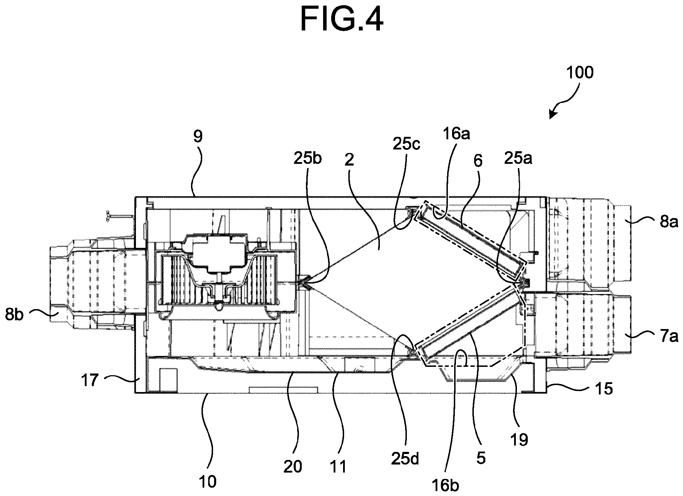

FIG. 1 is an exploded perspective view of a heat-exchange type ventilation apparatus according to a first embodiment of the present invention as viewed from the top surface side. FIG. 2 is an exploded perspective view of the heat-exchange type ventilation apparatus according to the first embodiment as viewed from the bottom surface side. FIG. 3 is a plan view of the heat-exchange type ventilation apparatus according to the first embodiment. FIG. 4 is a cross-sectional view of the heat-exchange type ventilation apparatus according to the first embodiment as viewed from the side thereof.

A heat-exchange type ventilation apparatus 100 according to the present embodiment includes a housing 1, which is a main body; a heat exchanger 2, an air supplying fan 3; an air discharging fan 4; a supply air filter 5; and a discharge air filter 6. The housing 1 includes an exterior-side inlet portion 7a; an interior-side inlet portion 8a; an interior-side outlet portion 7b; and an exterior-side outlet portion 8b formed therein. A supply air path that connects the exterior-side inlet portion 7a and the interior-side outlet portion 7b is formed in the housing 1. A discharge air path that connects the interior-side inlet portion 8a and the exterior-side outlet portion 8b is also formed in the housing 1.

The air supplying fan 3 is placed in the supply air path. The air supplying fan 3 generates a supply airflow that causes outside air (supply air) that is admitted through the exterior-side inlet portion 7a into the supply air path to flow out through the interior-side outlet portion 7b.

The air discharging fan 4 is placed in the discharge air path. The air discharging fan 4 generates a discharge airflow that causes inside air (discharge air) that is admitted through the interior-side inlet portion 8a into the discharge air path to flow out through the exterior-side outlet portion 8b.

The heat exchanger 2 is placed at the intersection portion of the supply air path and the discharge air path in the housing 1 and allows heat exchange between the supply airflow and the discharge airflow. The heat-exchange type ventilation apparatus 100 is a ventilation apparatus that provides ventilation while allowing heat exchange between the supply airflow and the discharge airflow.

The housing 1 includes six surfaces, i.e., a top plate 9, a bottom plate 10 opposite the top plate 9, and four side plates 15 to 18 closing the spaces between the top plate 9 and the bottom plate 10. The side plate 15 includes the exterior-side inlet portion 7a and the interior-side inlet portion 8a placed therein. The side plate 17, which is opposite the side plate 15, includes the interior-side outlet portion 7b and the exterior-side outlet portion 8b placed therein. In this case, the path passing from the exterior-side inlet portion 7a through the heat exchanger 2 to the air supplying fan 3 is the supply air path A-A', and the path passing from the interior-side inlet portion 8a through the heat exchanger 2 to the air discharging fan 4 is the discharge air path B-B'. The air supplying fan 3 and the air discharging fan 4 are disposed downstream of the heat exchanger 2 in their respective paths.

A control circuit 14 is attached to the side plate 18. The side plate 18 has an opening 18a and an opening 18b, which can be used as ports to admit air into the discharge air path B-B', in addition to the interior-side inlet portion 8a. The opening 18a is connected upstream of the heat exchanger 2 and thus the air admitted from the opening 18a is discharged through the heat exchanger 2. The opening 18b is connected downstream of the heat exchanger 2 and thus the air admitted from the opening 18b is discharged without going through the heat exchanger 2. By discharging without going through the heat exchanger 2, it is possible to reduce the pressure loss needed for the air to pass through the heat exchanger 2 although heat exchange is not performed. In this manner, the load on the air discharging fan 4 can be reduced and thereby the power consumption can be reduced. The side plate 16, which is opposite the side plate 18, has openings 16a and 16b, which are insertion apertures. The supply air filter 5 and the discharge air filter 6 can be inserted into the housing 1 through the openings 16a and 16b. Because maintenance can be performed on both of the supply air filter 5 and the discharge air filter 6 from one direction of the side plate 16, ease of cleaning can be improved.

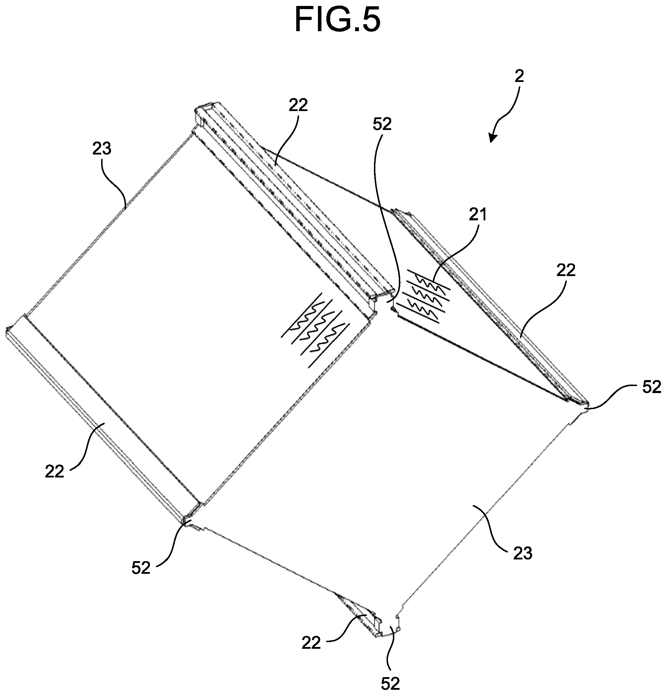

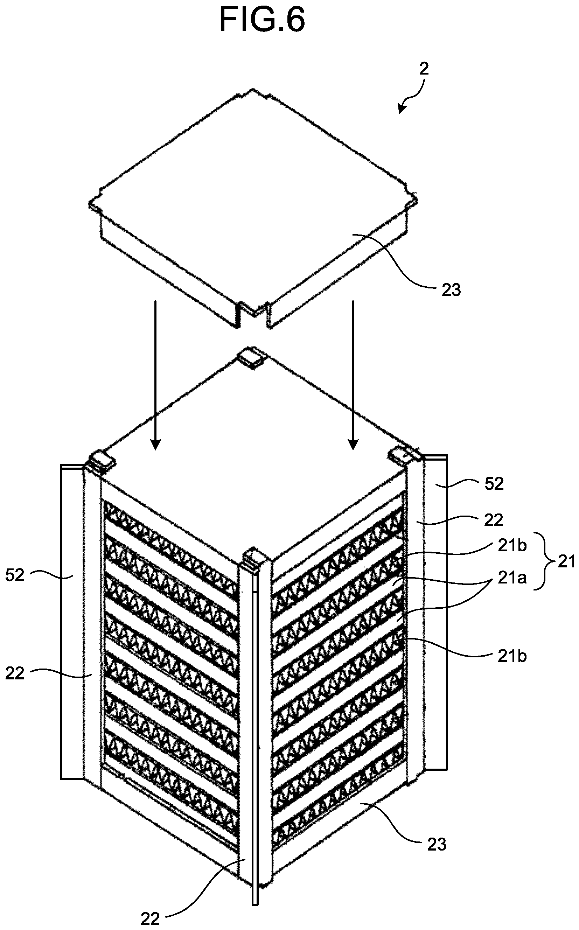

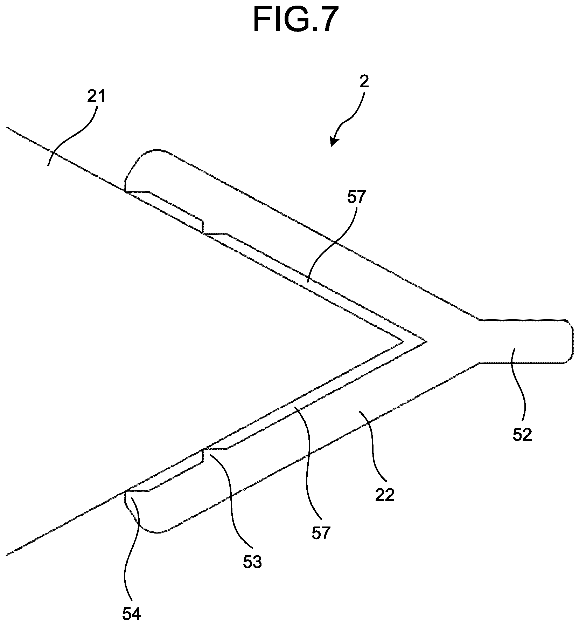

FIG. 5 is a perspective view of the heat exchanger 2 according to the first embodiment. FIG. 6 is an exploded perspective view of the heat exchanger 2 according to the first embodiment. FIG. 7 is a partially enlarged cross-sectional view of a corner portion of the heat exchanger 2 according to the first embodiment.

The heat exchanger 2 includes a heat exchange element 21, frame members 22, and end face members 23. The heat exchange element 21 is formed, for example, by alternately stacking partition members 21a, each of which is made from paper and has a sheet-like and polygonal shape, and spacing members 21b, each of which is made from paper and has a wave-like shape. In the present embodiment, the partition members 21a and the spacing members 21b have a square shape as viewed from the stacking direction of the partition members 21a, and thus, the heat exchange element 21 formed by stacking these members has a cuboid shape. The stacking direction of the partition members 21a is simply referred to as the stacking direction in the description hereinafter.

Spaces between the partition members 21a, which are spaced by the spacing members 21b, provide flow paths through which air can pass. By causing the supply airflow to pass through a flow path on one side of each of the partition members 21a and causing the discharge airflow to pass through a flow path on the other side thereof, the heat exchange element 21 can perform total heat exchange, sensible heat exchange, or latent heat exchange between the supply airflow and the discharge airflow via each of the partition members 21a. Use of paper for the partition members 21a and the spacing members 21b enables a reduction in material cost. Additionally, condensate generated when the heat exchange is performed is retained in the partition members 21a and the spacing members 21b, which are made from paper; therefore, blockage of the flow paths due to formation of ice can be reduced. The edges of the heat exchange element 21 that extend in the stacking direction are each covered by the frame member 22.

The frame members 22 cover the edges of the heat exchange element 21 that extend in the stacking direction. As illustrated in FIGS. 5 and 7, each of the frame members 22 has an L-like shape in a section and faces two of the side surfaces of the heat exchange element 21 that extend from the edges of the heat exchange element 21. The surface of each frame member 22 opposite the surface thereof that faces the heat exchange element 21 has an outer protrusion 52 formed thereon that extends in the stacking direction.

The surface of each frame member 22 that faces the heat exchange element 21 has inner protrusions 53 and 54 formed thereon that extend in the stacking direction. The inner protrusion 53 and the inner protrusion 54 are formed on the surface of each frame member 22 that faces one of the surfaces of the heat exchange element 21 and they are spaced apart from each other in a direction perpendicular to the stacking direction. Because each frame member 22 faces two of the surfaces of the heat exchange element 21, two each of the inner protrusions 53 and the inner protrusions 54 are formed on each frame member 22. The inner protrusions 53 and 54 abut on the side surfaces of the heat exchange element 21 or dig into the side surfaces of the heat exchange element 21.

As illustrated in FIG. 6, the end face members 23 cover the end surfaces of the heat exchange element 21 in the stacking direction. The end face members 23 are elastic bodies having airtightness to prevent air from leaking from the heat exchange element 21 to the end surface sides. Each of the end face members 23 is an airtight gasket having a thickness and thus air is prevented from leaking with ease even when the heat exchanger 2 has contracted.

With reference back to FIGS. 1 to 4, the bottom plate 10 includes a drain pan 11 on the inner surface side, and the drain pan 11 includes a drain port 12. The drain pan 11 includes a supply-air-side drain pan 19 to retain water resulting from condensation, due to the heat exchanger 2 or the like, of moisture contained in the air admitted through the exterior-side inlet portion 7a. The drain pan 11 also includes a discharge-air-side drain pan 20 to retain water such as condensate generated when the heat exchanger 2 performs heat exchange between air admitted through the interior-side inlet portion 8a and air admitted through the exterior-side inlet portion 7a. The discharge-air-side drain pan 20 is in communication with the drain port 12; therefore, drain water can be discharged. If the amount of water retained in the supply-air-side drain pan 19 is large, a water path may be included to achieve passage to the discharge-air-side drain pan 20.

The heat exchanger 2 is inserted into the housing 1 through an opening generated by removing the drain pan 11. The heat exchanger 2 is placed in the housing 1 such that one edge of the heat exchanger 2 that extends in the stacking direction and the diagonally opposite edge of the heat exchanger 2 are lined up vertically. By placing the heat exchanger 2 in such a manner, the area of heat exchange of the heat exchanger 2 can be used effectively and thereby an enhancement in thermal exchange efficiency can be achieved.

The housing 1 has support recess portions 25a to 25d formed therein to support the heat exchanger 2. The support recess portions 25a to 25d are grooves that extend in the stacking direction of the partition members 21a as placed in the housing 1.

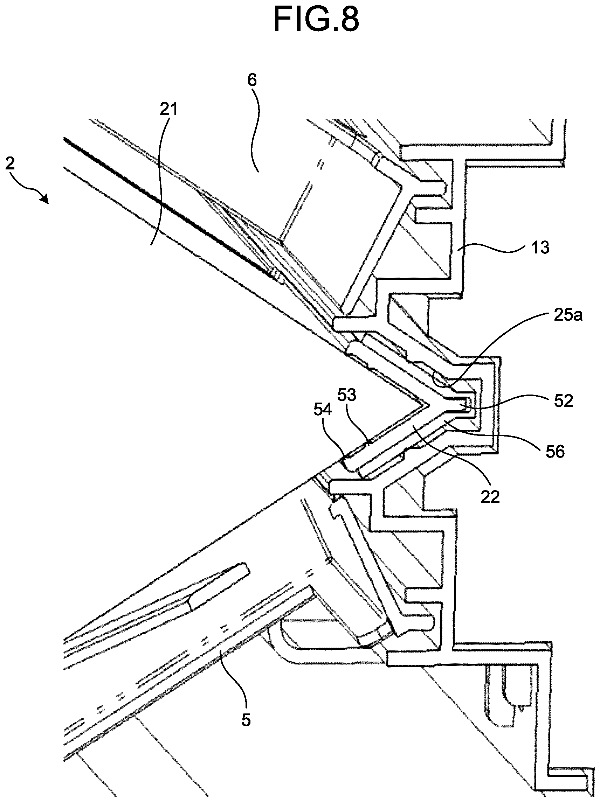

FIG. 8 is a partially enlarged cross-sectional view of a corner portion of the heat exchanger 2 accommodated in the housing 1 in the heat-exchange type ventilation apparatus 100 according to the first embodiment. In FIG. 8, the corner portion of the heat exchanger 2 on the side of the supply air filter 5 and the discharge air filter 6 in the housing 1 is enlarged. The support recess portion 25a is formed in a rib frame body 13 that supports the supply air filter 5 and the discharge air filter 6 in the housing 1. The outer protrusion 52 formed on one of the frame members 22 of the heat exchanger 2 is fitted in the support recess portion 25a. The heat exchanger 2 is positioned in the housing 1 when the outer protrusion 52 is fitted in the support recess portion 25a. As illustrated in FIG. 8, a seal material 56 may be interposed between the support recess portion 25a and the outer protrusion 52.

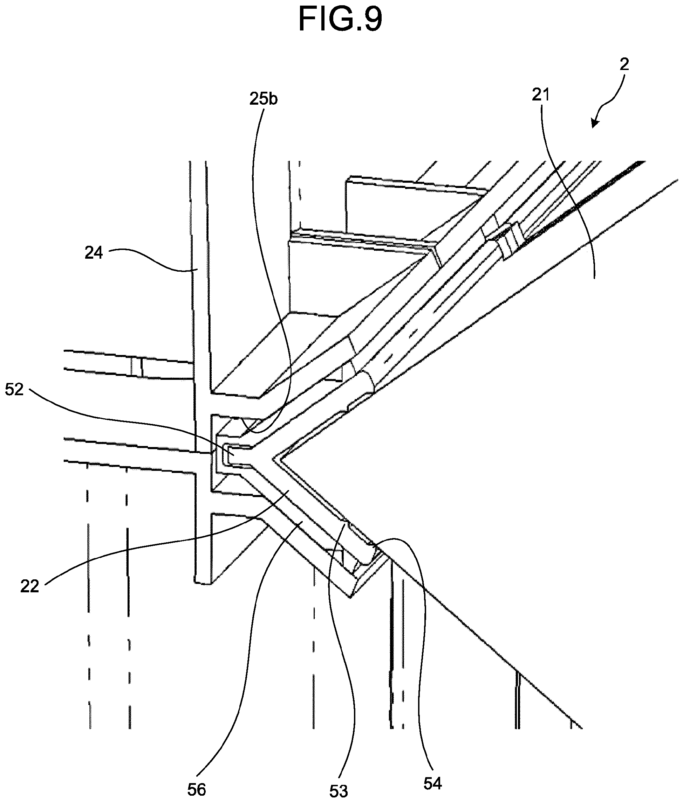

FIG. 9 is a partially enlarged cross-sectional view of a corner portion of the heat exchanger 2 accommodated in the housing 1 in the heat-exchange type ventilation apparatus 100 according to the first embodiment. In FIG. 9, the corner portion of the heat exchanger 2 on the side of the air supplying fan 3 and the air discharging fan 4 in the housing 1 is enlarged. The support recess portion 25b is formed in the casings of the air supplying fan 3 and the air discharging fan 4. The outer protrusion 52 formed on one of the frame members 22 of the heat exchanger 2 is fitted in the support recess portion 25b. The heat exchanger 2 is positioned in the housing 1 when the outer protrusion 52 is fitted in the support recess portion 25b. As illustrated in FIG. 9, the seal material 56 may be interposed between the support recess portion 25b and the outer protrusion 52. If a partition wall is placed between the air supplying fan 3 and the air discharging fan 4, and the heat exchanger 2, the support recess portion 25b may be formed in the partition wall.

The support recess portion 25c is formed on the top plate 9 side of the heat exchanger 2 in the housing 1, for example, in the top plate 9, although detailed illustration is omitted. The support recess portion 25d is formed on the bottom plate 10 side of the heat exchanger 2 in the housing 1, for example, in the drain pan 11. As in the case with the support recess portions 25a and 25b, the outer protrusions 52 of the frame members 22 are fitted in the support recess portions 25c and 25d. Additionally, the seal material 56 may be interposed between the support recess portion 25c and the corresponding one of the outer protrusions 52 and between the support recess portion 25d and the corresponding one of the outer protrusions 52.

In the heat-exchange type ventilation apparatus 100 described above, the inner protrusions 53 and 54, which are formed on the frame members 22, are in line contact with the heat exchange element 21; thus, this is less likely to form a gap than a case in which the frame members 22 are in surface contact with the heat exchange element 21, and thereby airtightness can be improved. Additionally, by interposing a seal material 57 in a gap between each of the frame members 22 and the heat exchange element 21, airtightness can be further improved.

Furthermore, the inner protrusions 53 and 54 can be used as marks indicative of an application area over which the seal material 57 is applied. Additionally, the inner protrusions 53 and 54 can be used as walls to prevent the seal material 57 from leaking from the gap between each of the frame members 22 and the heat exchange element 21. In particular, the inner protrusions 54, which are placed on the end portion sides of the inner protrusions 53 on each of the frame members 22, tend to function as walls to prevent the seal material 57 from leaking. By forming the inner protrusions 54 as end-portion-side protrusions on the end portions of each of the frame members 22, the inner protrusions 54 can function as walls to prevent the leaking more reliably. The number of inner protrusions formed on the surface of each frame member 22 that faces one of the surfaces of the heat exchange element 21 may be one, or may be three or more.

Additionally, the fitting structure in which the outer protrusions 52 of the frame members 22 are fitted in the support recess portions 25a to 25d can achieve an improvement in airtightness between the heat exchanger 2 and the housing 1. Furthermore, even when the heat exchanger 2 has contracted due to deterioration over time, the airtightness between the heat exchanger 2 and the housing 1 is maintained as long as the outer protrusions 52 are fitted in the support recess portions 25a to 25d. That is, even when the heat exchanger 2 has contracted, the airtightness is maintained with ease. Moreover, even when the dimensions of the heat exchanger 2 vary due to manufacturing errors, the airtightness between the heat exchanger 2 and the housing 1 is maintained as long as the degree of variation is such that the outer protrusions 52 are allowed to be fitted in the support recess portions 25a to 25d. Moreover, by interposing the seal material 56 between the outer protrusions 52 and the support recess portions 25a to 25d, the airtightness is maintained further reliably when the heat exchanger 2 has contracted. Furthermore, when the outer protrusions 52 are fitted in the support recess portions 25a to 25d in greater depths, the airtightness can be maintained even when the heat exchanger 2 has a greater contraction.

Furthermore, as long as the outer protrusions 52 are fitted in the support recess portions 25a to 25d, shifting in position of the heat exchanger 2 and falling of the heat exchanger 2 in the housing 1 can be prevented even when the heat exchanger 2 has contracted. Additionally, the frame members 22 reinforce the heat exchanger 2; thus, the product life can be extended.

Note that the configurations described in the foregoing embodiments are examples of the present invention; combining the present invention with other publicly known techniques is possible, and partial omissions and modifications are possible without departing from the scope of the present invention.

### Reference Signs List

1 housing (main body), 2 heat exchanger, 3 air supplying fan, 4 air discharging fan, 5 supply air filter, 6 discharge air filter, 7a exterior-side inlet portion, 7b interior-side outlet portion, 8a interior-side inlet portion, 8b exterior-side outlet portion, 9 top plate, 10 bottom plate, 11 drain pan, 13 rib frame body, 15 to 18 side plate, 16a, 16b opening (insertion aperture), 19 supply-air-side drain pan, 20 discharge-air-side drain pan, 21 heat exchange element, 21a partition member, 21b spacing member, 22 frame member, 23 end face member, 25a to 25d support recess portion, 52 outer protrusion, 53, 54 inner protrusion, 56, 57 seal material, 100 heat-exchange type ventilation apparatus.

## Claims

1. A heat-exchange type ventilation apparatus (100), comprising:
a main body (1) in which a supply air path and a discharge air path are formed, the supply air path comprising an exterior inlet portion (7a) to admit outside air and an interior outlet portion (7b) to discharge the outside air, the discharge air path comprising an interior inlet portion (8a) to admit inside air and an exterior outlet portion (8b) to discharge the inside air;
an air supplying fan (3) placed in the supply air path;
an air discharging fan (4) placed in the discharge air path; and
a heat exchanger (2) to allow heat exchange between air passing through the supply air path and air passing through the discharge air path, wherein
the heat exchanger (2) comprises:
a heat exchange element (21) comprising a plurality of partition members (21a) each having a sheet-like and polygonal shape, the partition members (21a) being stacked with spacing between the partition members (21a); and
a frame member (22) covering an edge of the heat exchange element (21), the edge extending in a stacking direction of the partition members (21a),
with
the frame member (22) having an L-like shape in a section and facing two of the side surfaces of the heat exchange element (21) that extend from the edges of the heat exchange element (21);
an outer protrusion (52) that extends in the stacking direction and is formed on a surface of the frame member (22), the surface being opposite a surface of the frame member (22) facing the heat exchange element (21), and
an inner protrusion (53, 54) that extends in the stacking direction and is formed on each of the two frame member faces facing the surfaces of heat exchange element (21) and in line contact with the heat exchange element (21),
wherein the inner protrusions (53, 54) abut on the side surfaces of the heat exchange element (21) or dig into the side surfaces of the heat exchange element 21.

2. The heat-exchange type ventilation apparatus (100) according to claim 1, wherein the inner protrusion (53, 54) is formed at an end portion of the frame member (22).

3. The heat-exchange type ventilation apparatus (100) according to claim 1, wherein the inner protrusions (53, 54) are formed on the surface of the frame member (22) facing one surface of the heat exchange element (21) such that the inner protrusions (53, 54) are spaced apart from each other in a direction perpendicular to the stacking direction.

4. The heat-exchange type ventilation apparatus (100) according to any one of claims 1 to 3, further comprising an end face member (23) covering an end surface of the heat exchange element (21) in the stacking direction, wherein
the end face member (23) is an elastic and airtight material.

5. The heat-exchange type ventilation apparatus (100) according to any one of claims 1 to 4, wherein a support recess portion (25a to 25d) is formed inside the main body (1) and supports the heat exchanger (2) with the outer protrusion (52) of the heat exchanger (2) fitted in the support recess portion (25a to 25d).

6. The heat-exchange type ventilation apparatus (100) according to claim 1, further comprising:
a seal material (57) interposed in a gap between the frame member (22) and the heat exchange element (21).

7. The heat-exchange type ventilation apparatus (100) according to claim 1, further comprising:
support recess portions (25a to 25d), which are grooves, that extends in the stacking direction and is formed in the main body (1), which is a housing (1), to support the heat exchanger (2),
wherein the support recess portions (25a to 25d) are formed in a rib frame body (13) that supports a supply air filter (5) and a discharge air filter (6) in the housing, and
the outer protrusion (52) is fitted in the support recess portion (25a).

8. The heat-exchange type ventilation apparatus (100) according to claim 7, further comprising:
a seal material (56) interposed between the support recess portion (25a) and the outer protrusion (52).

## Patentansprüche

1. Wärmetauscher-Lüftungsvorrichtung (100), die Folgendes umfasst:
einen Hauptkörper (1), in dem ein Zufuhrluftpfad und ein Abführluftpfad ausgebildet sind, wobei der Zufuhrluftpfad einen Außeneinlassabschnitt (7a), um Außenluft einzulassen, und einen Innenauslassabschnitt (7b), um die Außenluft abzuführen, umfasst, der Abführluftpfad einen Inneneinlassabschnitt (8a), um Innenluft einzulassen, und einen Außenauslassabschnitt (8b), um die Innenluft abzuführen, umfasst;
ein Luftzufuhrgebläse (3), das in dem Zufuhrluftpfad angeordnet ist;
ein Luftabführgebläse (4), das in dem Abführluftpfad angeordnet ist; und
einen Wärmetauscher (2), um einen Wärmeaustausch zwischen Luft, die durch den Zufuhrluftpfad hindurchtritt, und Luft, die durch den Abführluftpfad strömt, zu ermöglichen, wobei der Wärmetauscher (2) Folgendes umfasst:
ein Wärmetauschelement (21), das eine Vielzahl von Trennelementen (21a) umfasst, die jeweils eine plattenförmige und polygonale Form aufweisen, wobei die Trennelemente (21a) mit Abstand zwischen den Trennelementen (21a) gestapelt sind; und
ein Rahmenelement (22), das eine Kante des Wärmetauschelements (21) abdeckt, wobei sich die Kante in eine Stapelrichtung der Trennelemente (21a) erstreckt, wobei das Rahmenelement (22) in einem Querschnitt eine L-ähnliche Form aufweist und zwei der Seitenflächen des Wärmetauschelements (21) zugewandt ist, die sich von den Kanten des Wärmetauschelements (21) erstrecken;
einen Außenvorsprung (52), der sich in Stapelrichtung erstreckt und auf einer Fläche des Rahmenelements (22) ausgebildet ist, wobei die Fläche einer Fläche des Rahmenelements (22), die dem Wärmetauschelement (21) zugewandt ist, abgewandt ist und
einen Innenvorsprung (53, 54), der sich in Stapelrichtung erstreckt und auf jedem der zwei Rahmenelementflächen ausgebildet ist, die den Flächen des Wärmetauschelements (21) zugewandt sind, und sich in Linienkontakt mit dem Wärmetauschelement (21) befindet,
wobei die Innenvorsprünge (53, 54) an den Seitenflächen des Wärmetauschelements (21) anstoßen oder in die Seitenflächen des Wärmetauschelements (21) eingreifen.

2. Wärmetauscher-Lüftervorrichtung (100) nach Anspruch 1, wobei der Innenvorsprung (53, 54) an einem Endabschnitt des Rahmenelements (22) ausgebildet ist.

3. Wärmetauscher-Lüftervorrichtung (100) nach Anspruch 1, wobei die Innenvorsprünge (53, 54) auf der Fläche des Rahmenelements (22) ausgebildet sind, die einer Fläche des Wärmetauschelements (21) zugewandt ist, sodass die Innenvorsprünge (53, 54) in einer zur Stapelrichtung normalen Richtung voneinander beabstandet sind.

4. Wärmetauscher-Lüftervorrichtung (100) nach einem der Ansprüche 1 bis 3, die außerdem ein Endflächenelement (23) umfasst, das eine Endfläche des Wärmetauschelements (21) in Stapelrichtung abdeckt, wobei das Endflächenelement (23) aus einem elastischen und luftdichten Material besteht.

5. Wärmetauscher-Lüftervorrichtung (100) nach einem der Ansprüche 1 bis 4, wobei ein Stützaussparungsabschnitt (25a bis 25d) im Hauptkörper (1) ausgebildet ist und den Wärmetauscher (2) abstützt, wobei der Außenvorsprung (52) des Wärmetauschers (2) in den Stützaussparungsabschnitt (25a bis 25d) eingepasst ist.

6. Wärmetauscher-Lüftervorrichtung (100) nach Anspruch 1, die außerdem ein Dichtungsmaterial (57) umfasst, das in einen Spalt zwischen dem Rahmenelement (22) und dem Wärmetauschelement (21) eingefügt ist.

7. Wärmetauscher-Lüftervorrichtung (100) nach Anspruch 1, die außerdem Folgendes umfasst:
Stützaussparungsabschnitte (25a bis 25d), die Vertiefungen sind, die sich in Stapelrichtung erstrecken und in dem Hauptkörper (1), der ein Gehäuse (1) ist, ausgebildet sind, um den Wärmetauscher (2) abzustützen,
wobei die Stützaussparungsabschnitte (25a bis 25d) in einem Lamellenrahmenkörper (13) ausgebildet sind, der ein Luftzufuhrfilter (5) und Luftablassfilter (6) in dem Gehäuse abstützt, und
der Außenvorsprung (52) in den Stützaussparungsabschnitt (25a) eingepasst ist.

8. Wärmetauscher-Lüftervorrichtung (100) nach Anspruch 7, die außerdem ein Dichtungsmaterial (56) umfasst, das zwischen dem Stützaussparungsabschnitt (25a) und dem Außenvorsprung (52) eingefügt ist.

## Revendications

1. Appareil de ventilation (100) de type à échange de chaleur, comprenant :
un corps principal (1) dans lequel sont formés un trajet d'air d'alimentation et un trajet d'air d'évacuation, le trajet d'air d'alimentation comprenant une partie d'entrée extérieure (7a) pour admettre de l'air extérieur et une partie de sortie intérieure (7b) pour évacuer l'air extérieur, le trajet d'air d'évacuation comprenant une partie d'entrée intérieure (8a) pour admettre de l'air intérieur et une partie de sortie extérieure (8b) pour évacuer l'air intérieur ;
un ventilateur d'alimentation en air (3) placé dans le trajet d'air d'alimentation ;
un ventilateur d'évacuation d'air (4) placé dans le trajet d'air d'évacuation ; et
un échangeur de chaleur (2) pour permettre un échange de chaleur entre de l'air passant à travers le trajet d'air d'alimentation et de l'air passant à travers le trajet d'air d'évacuation, dans lequel
l'échangeur de chaleur (2) comprend :
un élément d'échange de chaleur (21) comprenant une pluralité d'éléments de séparation (21a) ayant chacun une forme polygonale et de type feuille, les éléments de séparation (21a) étant empilés avec un espacement entre les éléments de séparation (21a) ; et
un élément de cadre (22) recouvrant un bord de l'élément d'échange de chaleur (21), le bord s'étendant dans une direction d'empilement des éléments de séparation (21a),
l'élément de cadre (22) ayant une forme en L dans une section et faisant face à deux des surfaces latérales de l'élément d'échange de chaleur (21) qui s'étendent depuis les bords de l'élément d'échange de chaleur (21) ;
une saillie extérieure (52) qui s'étend dans la direction d'empilement et est formée sur une surface de l'élément de cadre (22), la surface étant opposée à une surface de l'élément de cadre (22) faisant face à l'élément d'échange de chaleur (21), et
une saillie intérieure (53, 54) qui s'étend dans la direction d'empilement et est formée sur chacune des deux faces d'élément de cadre faisant face aux surfaces de l'élément d'échange de chaleur (21) et en contact linéaire avec l'élément d'échange de chaleur (21),
dans lequel les saillies intérieures (53, 54) butent sur les surfaces latérales de l'élément d'échange de chaleur (21) ou s'enfoncent dans les surfaces latérales de l'élément d'échange de chaleur 21.

2. Appareil de ventilation (100) de type à échange de chaleur selon la revendication 1, dans lequel la saillie intérieure (53, 54) est formée au niveau d'une partie d'extrémité de l'élément de cadre (22).

3. Appareil de ventilation (100) de type à échange de chaleur selon la revendication 1, dans lequel les saillies intérieures (53, 54) sont formées sur la surface de l'élément de cadre (22) faisant face à une surface de l'élément d'échange de chaleur (21) de sorte que les saillies intérieures (53, 54) sont espacées l'une de l'autre dans une direction perpendiculaire à la direction d'empilement.

4. Appareil de ventilation (100) de type à échange de chaleur selon l'une quelconque des revendications 1 à 3, comprenant en outre un élément de face d'extrémité (23) recouvrant une surface d'extrémité de l'élément d'échange de chaleur (21) dans la direction d'empilement, dans lequel
l'élément de face d'extrémité (23) est un matériau élastique et étanche à l'air.

5. Appareil de ventilation (100) de type à échange de chaleur selon l'une quelconque des revendications 1 à 4, dans lequel une partie évidée de support (25a à 25d) est formée à l'intérieur du corps principal (1) et supporte l'échangeur de chaleur (2) avec la saillie extérieure (52) de l'échangeur de chaleur (2) montée dans la partie évidée de support (25a à 25d) .

6. Appareil de ventilation (100) de type à échange de chaleur selon la revendication 1, comprenant en outre :
un matériau d'étanchéité (57) interposé dans un espace entre l'élément de cadre (22) et l'élément d'échange de chaleur (21).

7. Appareil de ventilation (100) de type à échange de chaleur selon la revendication 1, comprenant en outre :
des parties évidées de support (25a à 25d), qui sont des rainures, qui s'étendent dans la direction d'empilement et sont formées dans le corps principal (1), qui est un boîtier (1), pour supporter l'échangeur de chaleur (2),
dans lequel les parties évidées de support (25a à 25d) sont formées dans un corps de cadre nervuré (13) qui supporte un filtre à air d'alimentation (5) et un filtre à air d'évacuation (6) dans le boîtier, et
la saillie extérieure (52) est montée dans la partie évidée de support (25a).

8. Appareil de ventilation (100) de type à échange de chaleur selon la revendication 7, comprenant en outre :
un matériau d'étanchéité (56) interposé entre la partie évidée de support (25a) et la saillie extérieure (52).
